# EUROPEAN PATENT APPLICATION

(11) **EP 1 585 157 A1**
(43) Date of publication of application: **12.10.2005**
(21) Application number: 05007447.5
(22) Date of filing: 05.04.2005
(51) Int. Cl.: H01H 33/02

(54) **Polyphase switch**

(30) Priority: 05.04.2004 JP 2004111341
(71) Applicant: Nissin Electric Co., Ltd., Kyoto 615-8686 (JP)
(72) Inventor: Shimazaki, Toshio, Ukyo-ku Kyoto-shi, Kyoto, 615-8686 (JP); Ikeda, Mamoru, Ukyo-ku Kyoto-shi, Kyoto, 615-8686 (JP); Imai, Syuichi, Ukyo-ku Kyoto-shi, Kyoto, 615-8686 (JP); Matsui, Keiji, Ukyo-ku Kyoto-shi, Kyoto, 615-8686 (JP); Yoshihara, Jun, Ukyo-ku Kyoto-shi, Kyoto, 615-8686 (JP)
(74) Representative: Grünecker, Kinkeldey, Stockmair & Schwanhäusser Anwaltssozietät

(57) **Abstract**

A fixed contact 4 and a movable contact 5 of each phase of a polyphase switch 1 is arranged on the same plane, further, switches of respective phases are arranged on the same plane. For that purpose, an insulation maintaining portion 3 having leg portions 2 of a number of phases extended radially on a plane is provided and a switch including the fixed contact 4 and the movable contact 5 is arranged at a space between the respective leg portions 2. Since the polyphase switch is planarly constituted, a height thereof can be reduced. Therefore, even in a case of containing a plurality of pieces of polyphase switches at a GIS or the like, it is not necessary to enlarge the height.

## Description

### BACKGROUND OF THE INVENTION

The present invention relates to a polyphase switch used in a gas-insulated switching apparatus (hereinafter, referred to as 'GIS'), an in-gas cubicle or the like.

A polyphase switch of a background art will be explained in reference to drawings.

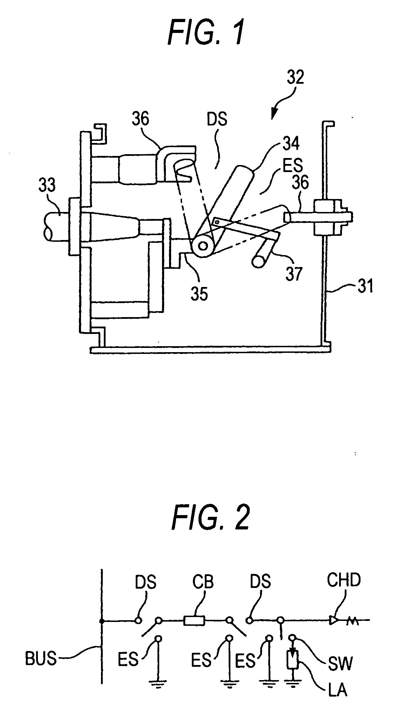

Fig.1 shows an inner structure of a vessel 31 of GIS.

An isolator/grounding switch 32 which is a 3 phases switch is arranged in the vessel 31. The illustrated grounding switch 32 constitutes a switch of 1 phase and 3 phases thereof are aligned in the depth direction of the drawing.

The isolator/grounding switch 32 is constituted by an isolator DS and a grounding switch ES. Amain circuit conductor 33 introduced from outside of the vessel 31 is connected to a hinge portion 35 of a movable contact 34. A fixed contact 36 of the isolator DS is connected to a main circuit conductor (not illustrated) in the vessel 31.

A front end portion of a ground terminal 36 held in the vessel 31 constitutes a fixed contact of the grounding switch ES.

The movable contact 34 is used commonly by the isolator DS and the grounding switch ES. The movable contact 34 is driven by a link mechanism 37 connected to an operating mechanism, not illustrated. The isolator/grounding switch 32 constitutes a 3 positions switch stopped at 3 positions of a position of 'ON' of the isolator DS, a position of 'OFF' of both of the isolator DS and the grounding switch ES, and a position of 'ON' of the grounding switch ES.

A structure of the 3 phases switch of the background art is three-dimensional, and a shape thereof is enlarged. Therefore, when used in GIS or the like, the shape of the apparatus is enlarged. Further, in an electricity receiving unit of GIS, a plurality of pieces of 3 phases switches of isolators/grounding switches, switches for a surge arrester are arranged in the unit and therefore, the unit becomes large-sized.

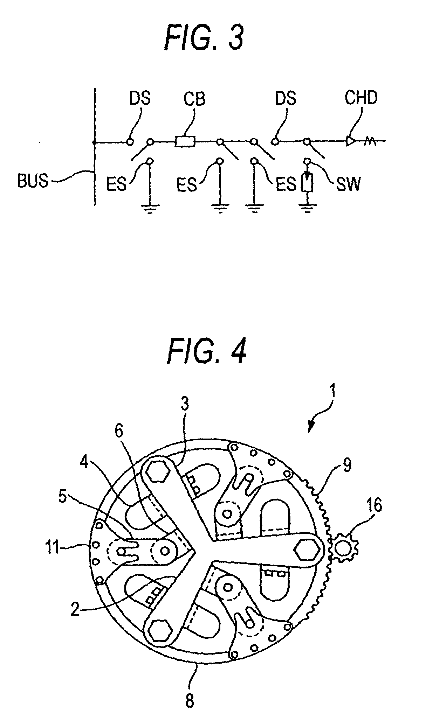

Figs.2 and 3 are single wiring diagrams of an electricity receiving unit of GIS.

The electricity receiving unit is constituted by a bus line BUS, a cable head CHD, and a breaker CB, and isolators DS are inserted on both sides of the breaker CB. A circuit on a side of a cable head CHD is connected with a serge arrester LA via SW. Respective main circuit conductors can respectively be grounded by the grounding switches ES.

As the isolator DS, the isolator/grounding switch 32 shown in Fig.1 is used. In an example of Fig.2, the switch SW for the serge arrester LA and the grounding switch ES are constituted as an integral switch, and a switch having a structure similar to that of the isolator/grounding switch 32 is used. Therefore, three of 3 phases switches are arranged in the electricity receiving unit. According to a circuit example of Fig.3, the switch SW for the serge arrester LA and the grounding switch ES are separately constituted. Therefore, four 3 phases switches are arranged in the electricity receiving unit.

In this way, the electricity receiving unit needs to contain the plurality of 3 phases switches and since downsized formation of the 3 phases switches cannot be realized, it is unavoidable that a height of the electricity receiving unit is heightened.

In contrast thereto, it is proposed to reduce a height of an isolator/grounding switch by arranging an isolator and a grounding switch planarly (refer to Patent Reference 1).

### [Patent Reference 1]

### Unexamined Japanese Patent Application Publication No. Hei11-89029

However, the isolator/grounding apparatus described in Patent Reference 1 is for a single phase and therefore, 3 pieces thereof are needed when used for 3 phases, as a result, the apparatus cannot be constituted to downsized formation.

In this way, there poses a problem that the shape of the polyphase switch of the background art is large. Therefore, there poses a problem that also a switching apparatus or the like for containing the polyphase switch is large-sized.

It is an object of the invention to downsize a polyphase switch.

### SUMMARY OF THE INVENTION

The invention is carried out to achieve the above-described object, fixed contacts and movable contacts of respective phases of a polyphase switch are arranged on the same plane, further, switches of respective phases are arranged on the same plane. For that purpose, there is provided an insulation maintaining portion having leg portions of a number of phases extended radially on a plane and the switches of the respective phases including the fixed contacts and the movable contacts are arranged at spaces among the respective leg portions.

According to the first aspect of the present invention, there is provided a polyphase switch including:
an insulation maintaining portion formed by extending a plurality of leg portions from a center portion to an outer side on one plane;
a switch portion arranged at a space formed between the leg portions contiguous to each other;
two fixed contacts which are fixed contacts constituting the switch and attached to the insulation holding portion to be opposed to each other;
a movable contact which is a movable contact constituting the switch portion and attached to a side of the center portion of the insulation maintaining portion by a hinge portion for bringing the two fixed contacts into contact with each other and separating the two fixed contacts; and
a drive portion for simultaneously driving the respective movable contacts to be brought into contact with the fixed contacts and separate the fixed contacts.

According to the second aspect of the present invention, there is provided the polyphase switch according to the first aspect, wherein
the drive portion includes:
a moving portion formed in a ring-like shape and held by a front end of the leg portion movably in a circumferential direction;
an engaging portion attached to the moving portion and engaged with the movable contact for driving to open and close the movable contact relative to the fixed contact; and
a drive transmitting portion for transmitting a driving operation by an operating portion to the moving portion.

According to the third aspect of the present invention, there is provided the polyphase switch according to the second aspect, wherein
the moving portion includes a gear portion formed at an outer periphery thereof, and
the drive transmitting portion includes a gear engaged with the gear portion.

According to the forth aspect of the present invention, there is provided the polyphase switch according to the third aspect, wherein
the gear portion of the moving portion is formed separately from the moving portion, and is fixed to the moving portion.

According to the fifth aspect of the present invention, there is provided the polyphase switch according to the second aspect, wherein
the moving portion includes a gear portion formed at an outer periphery thereof, and
the drive transmitting portion includes a chain engaged with the gear portion.

According to the sixth aspect of the present invention, there is provided the polyphase switch according to the second aspect, wherein
the moving portion includes a gear portion formed at an outer periphery thereof, and
the drive transmitting portion includes a worm gear engaged with the gear portion.

According to the seventh aspect of the present invention, there is provided the polyphase switch according to the first aspect, wherein
the drive portion constitutes a 3 positions polyphase switch by driving the movable contact to be capable to stop at a position of being brought into contact with either of two of the fixed contacts and at a position of not being brought into contact with either thereof.

According to the eighth aspect of the present invention, there is provided the polyphase switch according to any one of the first aspect through the seventh aspect, wherein
the switch portion constitutes an isolator and a grounding switch.

According to the ninth aspect of the present invention, there is provided the polyphase switch according to any one of the first aspect through the seventh aspect, wherein
the switch portion constitutes two of grounding switches.

According to the tenth aspect of the present invention, there is provided the polyphase switch according to any one of the first aspect through the seventh aspect, wherein
the switch portion constitutes two of isolators.

According to the eleventh aspect of the present invention, there is provided the polyphase switch according to any one of the first aspect through the sixth aspect, wherein
the switch portion constitutes one isolator by not using one fixed contact.

According to the twelfth aspect of the present invention, there is provided the polyphase switch according to any one of the first aspect through the sixth aspect, wherein
the switch constitutes one grounding switch by not using one fixed contact.

According to the thirteenth aspect of the present invention, there is provided the polyphase switch according to any one of the first aspect through the sixth aspect, wherein
the switch is constituted by one fixed contact and the one movable contact by omitting one of the two fixed contacts.

Further, in the specification, there are constituted expressions stating 'a fixed contact and a movable contact are arranged on the same plane' and 'switches of respective phases are arranged on the same plane' as described above. The 'plane' in the descriptions does not signify a plane in strict meaning. The 'plane' mentioned here may be provided with more or less width in a height direction so far as the width falls in a range capable of achieving the object of reducing a height of the polyphase switch according to the invention.

### BRIEF DESCRIPTION OF THE DRAWINGS

Fig.1 is a view showing a structure of a 3 phase isolator/grounding switch of a background art.
Fig.2 is a single line wiring diagram (part 1) of an electricity receiving unit of a switching apparatus.
Fig.3 is a single line wiring diagram (part 2) of an electricity receiving unit of a switching apparatus.
Fig. 4 is a view showing an embodiment of a polyphase switch of the invention.

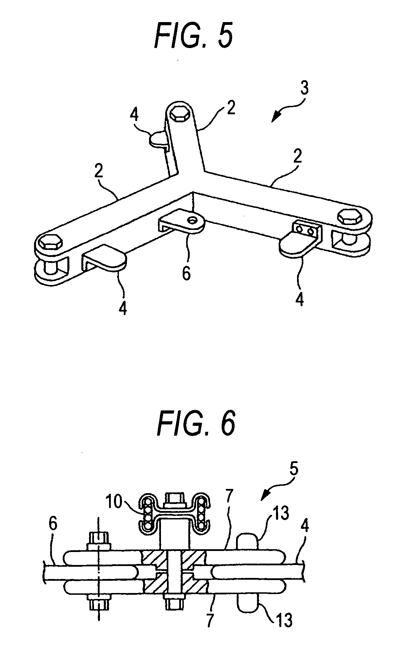

Fig.5 is a view showing a constitution of an insulation maintaining portion in Fig.4.
Fig. 6 is a view showing a constitution of a movable contact in Figs.4 and 5.

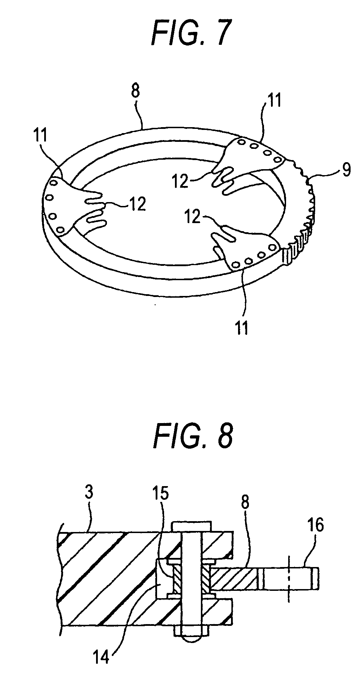

Fig.7 is a view showing a constitution of a moving portion in Fig.4.
Fig.8 is a view showing a relationship between the insulation maintaining portion and the moving portion in Fig.4.

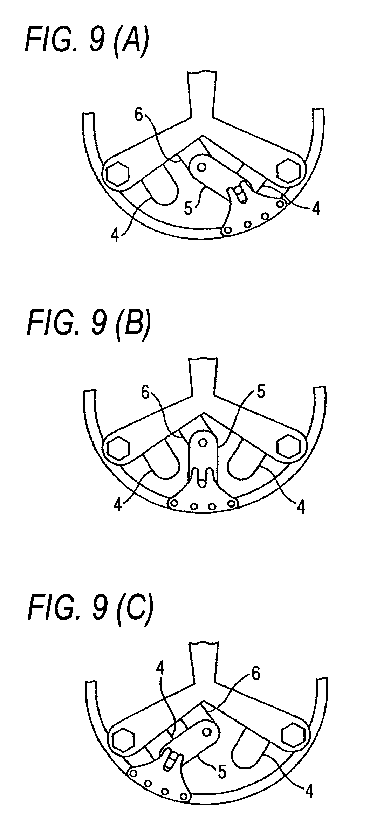

Figs.9A to 9C illustrate views showing operation of opening and closing a switch in Fig.4.

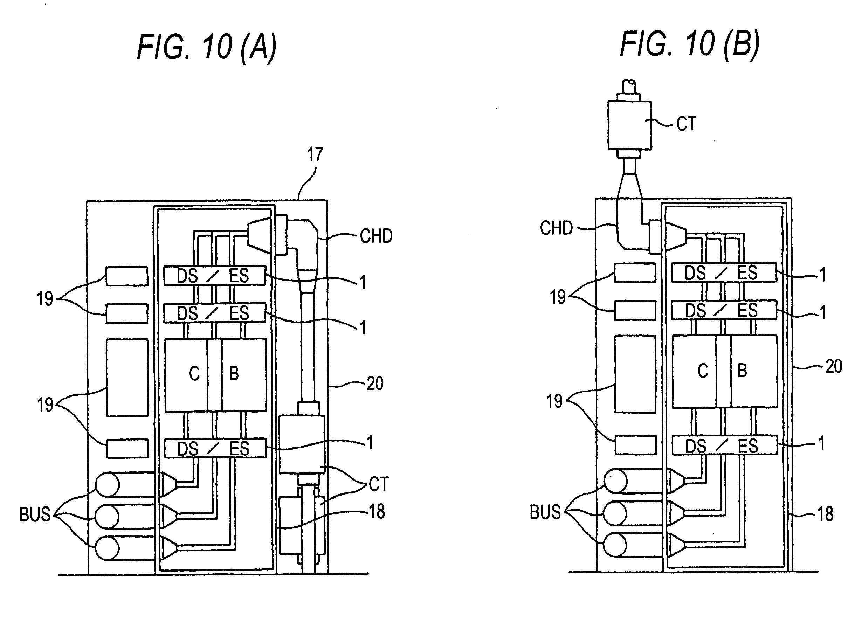

Figs.10A and 10B illustrate views showing a state of integrating the polyphase switch of Fig.4 to GIS.

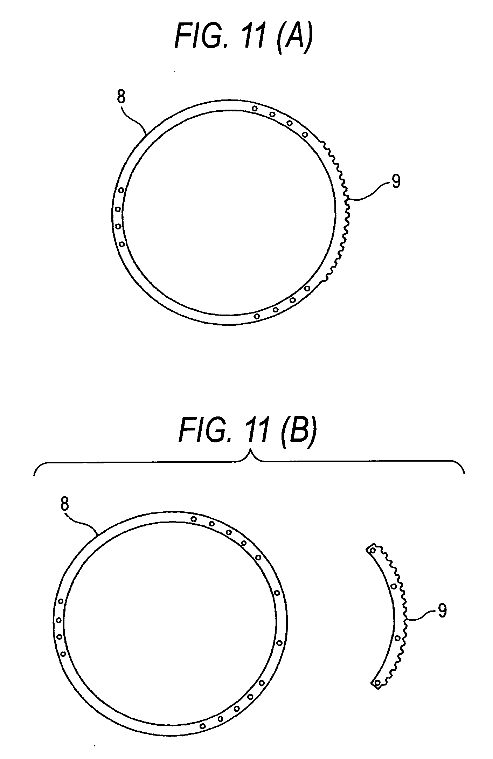

Figs.11A and 11B illustrate views showing various structures of the moving portion according to the invention.

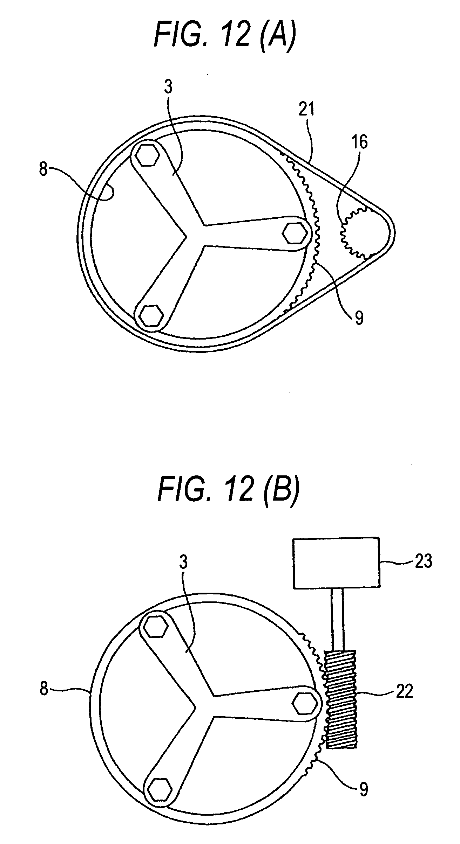

Figs.12A and 12B illustrate views showing various constitutions for driving the moving portion according to the invention.

### DETAILED DESCRIPTION OF THE PREFERRED EMBODIMENTS

An explanation will be given of a 3 phases switch to which the invention is applied in reference to the drawings.

Fig.4 is a plane view showing a state of viewing a 3 phase switch 1 from above.

An insulation maintaining portion 3 is formed by 3 pieces of leg portions 2. 3 pieces of the leg portion 2 are extended from a center portion radially to an outer side and are integrated at the center portion. Switches of respective phases are arranged at respectives of three spaces formed among 3 pieces of the leg portions 2.

Fig.5 shows a structure of the insulation maintaining portion 3. Two of fixed contact 4 are attached to the respective leg portions 2 in a state of being opposed to each other in the spaces among the leg portions 2. A hinge portion 6 for a movable contact 5 is attached to a center side of one of the leg portions 2. The fixed contact 4 and the hinge portion 6 are attached to the leg portion 2 by bolts.

Fig.6 shows a structure of the movable contact 5. The movable contact 5 is constituted by two sheets of conductive plates 7. The movable contact 5 is fastened to the hinge portion 6 pivotably by a bolt at one end thereof, applied with a contact pressure by a contact press spring 10 at a middle portion thereof and pinches the fixed contact 4 elastically at other end thereof. Further, a projection 13 is provided at an outer side of the other end.

Referring back to Fig.4, a moving portion 8 for driving to open and close the movable contact 5 is arranged at an outer periphery of the insulation maintaining portion 3. Fig. 7 shows a structure of the moving portion 8. The moving portion 8 is constituted by a ring-like member made of a metal or made of an insulator, and a gear portion 9 is formed at a portion or a total of an outer periphery thereof. Engaging portions 11 for driving the movable contacts 5 are attached to 3 portions on an inner peripheral side of the moving portion 8. The engaging portion 11 is constituted by an insulating material, formed with a notched groove 12 extended in a various direction at a front end thereof, and is engaged with the projection 13 (refer to Fig.6) provided at the movable contact 5.

Fig.8 shows a constitution for holding the moving portion 8 at the insulation maintaining portion 3. A recess portion 14 opened in a direction of a front end is formed at a front end of the leg portion 2 of the insulation maintaining portion 3. A roller 15 is rotatably attached to inside of the recess portion 14. An inner peripheral portion of the moving portion 8 is brought into contact with the roller, and two upper and lower faces thereof are supported by upper and lower faces of the recess portion 14. By the constitution, the moving portion 8 is held by the insulation maintaining portion 3 movably in a circumferential direction.

Referring back to Fig.4, a gear 16 driven to rotate by an operating portion (not illustrated) is arranged to be brought in mesh with the gear portion 9 formed at the outer periphery of the moving portion 8. When the gear 16 is rotated by being driven by the operating portion, the moving portion 8 is moved to reciprocate in the circumferential direction. By the movement, the movable contact 5 engaged with the engaging portion 11 is moved to reciprocate between two of the fixed contacts 4 centering on the hinge portion 6.

An explanation will be given of operation of opening and closing the 3 phases switch 1 in reference to Fig.9.

By moving to rotate to reciprocate the moving portion 8 by driving an operator, the movable contact 5 is stopped at 3 positions of A, B, C. Notation A designates a state in which the movable contact 5 is brought into contact with one of the fixed contacts 4, notation B designates a state in which the movable contact 5 is not brought into contact with either of the fixed contacts 4, and notation C designates a state in which the movable contact 5 is brought into contact with other of the fixed contacts 4. The 3 phases switch can be used as a 3 positions switch by stopping at 3 positions of A, B, C, and can be used as a 2 positions switch by stopping at only 2 positions of A, C.

The 3 phases switch 1 can be used for various uses as 2 switches making the movable contact 5 common. For example, the 3 phases switch 1 can be used as an isolator/grounding switch constituting one of them as an isolator and constituting other thereof as a grounding switch, or constituting both thereof as grounding switches. Further, the 3 phases switch 1 can be used as a general switch for a serge arrester integrated with a grounding switch.

An explanation will be given of an example of applying the above-described 3 phases switch 1 to an electricity receiving unit of GIS in reference to Fig. 10. The drawing shows an inner constitution of an electricity receiving unit 17 containing the circuit shown in the single line wiring diagram of Fig.2.

Fig.10 (A) shows an example of arranging the cable head CHD to a rear face of the unit. An insulating gas of SF6 gas or the like is filled in the electricity receiving unit 17 and a vessel 18 containing a main circuit apparatus is arranged in the electricity receiving unit 17. A bus line BUS, a breaker, an operator 19 for operating a breaker are arranged at a front face of the vessel 18 and the cable head CHD and a current transformer CT is arranged at a rear face thereof. A total of these is covered by an outer wall 20.

Inside of the vessel 18 is arranged with an isolator/grounding switch DS/ES, a breaker CB, an isolator/grounding switch DS/ES, and a switch for a serge arrester/grounding switch SW/ES in this order from below. Each switch of the switch DS/ES, SW/ES is constituted by the 3 phases switch 1.

Each 3 phases switch 1 can be fixed in the vessel 18 by holding the insulation maintaining portion 3 by pertinent means. The circuit shown in Fig.2 is constituted by connecting respective fixed contacts, movable contacts 5 to the bus line BUS, the cable head CHD, a serge arrester, a grounding terminal and the like by a conductor.

Fig.10 (B) shows an example of arranging the cable head CHD at the front face of the unit. When GIS is installed indoors, there are frequently cases of bringing down a cable from above. According to the example shown in Fig.10 (B), the cable head CHD is arranged at a space formed above the operator 19 arranged at the front face of the electricity receiving unit 17. In this case, the current transformer CT is arranged outside of the unit.

By arranging the cable head CHD to the space of the front face of the unit in this way, a space of arranging the cable head CHD at the rear face of the unit is dispensed with. Therefore, a depth dimension of the unit can be reduced. Further, all of maintenance operation can be carried out from the front face of the unit and therefore, it is not necessary to constitute the rear face of the unit by a door structure and only a cover is attached thereto. Further, a space for maintenance of the rear face of the unit is not needed and therefore, also a space of a total of GIS can be reduced.

The respective 3 phases switches 1 are operated by the operators separate from each other and operated to open and close separately from each other.

Further, as is apparent from Fig.10, the 3 phases switch 1 is planarly constituted, a height thereof is restrained to be low and therefore, even when 3 pieces thereof are arranged as illustrated, a height of the electricity receiving unit 17 can be restrained to be low.

Although the embodiment of the invention is explained as described above, the invention is not limited to the above-described embodiment but can be modified variously as shown below.

### (Example 1)

Although according to the above-described embodiment, the two fixed contacts 4 are provided for the switch of the single phase, the embodiment can be used as a single switch by using only the single fixed contact 4 and the single movable contact 5 without using the other single fixed contact 4. Further, the embodiment can be used as a single switch by only providing the single fixed contact 4 and the single movable contact 5 for the switch of the single phase by omitting the other single fixed contact in the two fixed contacts. In either of the cases, the polyphase switches can be arranged to align on one plane and therefore, downsizing can be realized similar to the above-described example.

### (Example 2)

The polyphase switch of the invention is not limited to 3 phases but is applicable also to 2 phases, 4 phases and the like. Further, it is not necessarily needed that a number of the leg portions 2 of the insulation maintaining portion 3 is constituted by a number the same as a number of phases. For example, a 3 phases switch can also be constituted by providing 4 pieces of the leg portions 2 and arranging switches at 3 locations in 4 spaces.

### (Example 3)

Fig.11 shows various structures of the moving portion 8. Fig.11 (A) shows an example of directly forming the gear portion 9 at the moving portion 8. Fig.10 (B) shows an example of forming the gear portion 9 separately from the moving portion 8 to attach to the moving portion 8 by a bolt. Although the gear portion 9 may be formed only at a portion of the moving portion 8 as illustrated, the gear portion 9 can also be formed over a total range of the outer periphery of the moving portion 8.

### (Example 4)

Fig. 12 shows various constitutions for driving the moving portion 8.

In Fig.12 (A), the gear portion 9 is connected to the gear 16 by a chain 21 to drive. In this case, the gear portion 9 is formed over the total outer periphery of the moving portion 8.

In Fig.12 (B), the gear portion 9 is connected to an operating mechanism 23 by a worm gear 22.

According to the invention, the polyphase switch is planarly constituted and therefore, the height can be reduced. Further, an effect of reduced formation is significant since the switches of 3 phases can be arranged on one plane. Therefore, a height of GIS or the like can be reduced even in a case of containing a plurality of pieces of the polyphase switches in GIS or the like.

## Claims

1. A polyphase switch comprising:
an insulation maintaining portion formed by extending a plurality of leg portions from a center portion to an outer side on one plane;
a switch portion arranged at a space formed between the leg portions contiguous to each other;
two fixed contacts which are fixed contacts constituting the switch and attached to the insulation holding portion to be opposed to each other;
a movable contact which is a movable contact constituting the switch portion and attached to a side of the center portion of the insulation maintaining portion by a hinge portion for bringing the two fixed contacts into contact with each other and separating the two fixed contacts; and
a drive portion for simultaneously driving the respective movable contacts to be brought into contact with the fixed contacts and separate the fixed contacts.

2. The polyphase switch according to Claim 1, wherein
the drive portion includes:
a moving portion formed in a ring-like shape and held by a front end of the leg portion movably in a circumferential direction;
an engaging portion attached to the moving portion and engaged with the movable contact for driving to open and close the movable contact relative to the fixed contact; and
a drive transmitting portion for transmitting a driving operation by an operating portion to the moving portion.

3. The polyphase switch according to Claim 2, wherein
the moving portion includes a gear portion formed at an outer periphery thereof, and
the drive transmitting portion includes a gear engaged with the gear portion.

4. The polyphase switch according to Claim 3, wherein
the gear portion of the moving portion is formed separately from the moving portion, and is fixed to the moving portion.

5. The polyphase switch according to Claim 2, wherein
the moving portion includes a gear portion formed at an outer periphery thereof, and
the drive transmitting portion includes a chain engaged with the gear portion.

6. The polyphase switch according to Claim 2, wherein
the moving portion includes a gear portion formed at an outer periphery thereof, and
the drive transmitting portion includes a worm gear engaged with the gear portion.

7. The polyphase switch according to Claim 1, wherein
the drive portion constitutes a 3 positions polyphase switch by driving the movable contact to be capable to stop at a position of being brought into contact with either of two of the fixed contacts and at a position of not being brought into contact with either thereof.

8. The polyphase switch according to any one of Claims 1 through 7, wherein
the switch portion constitutes an isolator and a grounding switch.

9. The polyphase switch according to any one of Claims 1 through 7, wherein
the switch portion constitutes two of grounding switches.

10. The polyphase switch according to any one of Claims 1 through 7, wherein
the switch portion constitutes two of isolators.

11. The polyphase switch according to any one of Claims 1 through 6, wherein
the switch portion constitutes one isolator by not using one fixed contact.

12. The polyphase switch according to any one of Claims 1 through 6, wherein
the switch constitutes one grounding switch by not using one fixed contact.

13. The polyphase switch according to any one of Claims 1 through 6, wherein
the switch is constituted by one fixed contact and the one movable contact by omitting one of the two fixed contacts.
